# EUROPEAN PATENT APPLICATION

(11) **EP 2 273 275 A1**
(43) Date of publication of application: **12.01.2011**
(21) Application number: 09165111.7
(22) Date of filing: 09.07.2009
(51) Int. Cl.: G01P 5/16

(54) **Pressure Probe**

(71) Applicant: Nolte, Lutz, 8708 Männedorf (CH)
(72) Inventor: Nolte, Lutz, 8708 Männedorf (CH)
(74) Representative: Taruttis, Tilman

(57) **Abstract**

A pressure probe, like a pitot tube or static probe particularly suitable for aviation purposes is disclosed, wherein the tube or probe comprises means for detecting and removing a blockage of the passage of the tube or probe. Disclosed means comprise wave emitters and correlated wave sensors or a rod shaped means or a plurality of pressure sensors arranged in the tube or probe.

## Description

Typically an aircraft includes pitot-tube systems for determining the speed of the aircraft relative to surrounding air. A pitot-static system typically includes on or more pitot tubes, which project out of the airframe. The opening of a pitot tube is directed into direction of the aircraft's movement. When the aircraft moves relative to its surrounding air, the pitot tubes project into the air stream flowing along the aircraft, thus allowing the impact pressure of the air, also called ram air pressure, to enter the tubes. The impact pressure apparently increases with increasing speed of the aircraft relative to the surrounding air.

In addition to pitot tubes, which project from the airframe into the surrounding airflow, static probes, also known as static ports, are used for sensing the static atmosphere pressure. These static probes may be located and arranged at the aircraft such that they sense only the static atmosphere pressure. From conventional systems it is known that static probes for example can be placed at specific locations at the fuselage of an aircraft with their opening directed perpendicular to an airflow along the aircraft. These locations remain unaffected of any dynamic pressure variances caused by a movement of the aircraft. In this way a static probe detects the static atmosphere pressure regardless of any movement of the aircraft relative to the surrounding air.

In this description the speed of an aircraft relative to its surrounding air is called air speed. In contrast the speed of an aircraft relative to ground is called ground speed. Apparently air speed and ground speed may deviate, for example when the air, which surrounds the aircraft, is moving relative to ground.

In order to achieve a signal indicating the air speed of an aircraft, the pressure differential between the impact air pressure from the pitot tube and the static air pressure from a static probe can be sensed, particularly by subtracting the static air pressure from the ram air pressure. The resulting pressure can either be directly used in any conventional indicating device, i.e. an airspeed indicator, or can be sensed and further processed by a conventional processing system. In modem aircraft this pressure can be converted to an electric signal, which may be further processed in an air data computer and displayed by an airspeed indicator in the cockpit.

Numerous pitot tube systems and static probe systems are known from prior art, wherein numerous pure pitot tube systems and numerous pure static probe systems are known. Furthermore numerous combinations of pitot tubes and static probes, so-called multi-probes or pitot-static systems are known. In particular static probes may be integral to the pitot tubes. The invention described hereinafter may be applied to any kind of tube or probe or combination thereof, as will become apparent to those skilled in the art from the following description.

Although there may be differences in the particular design of a pitot tube or a static port or a multi-probe, they all have in common to have an opening exposed to the air surrounding the aircraft. Particularly pitot tubes are located and arranged such that their intake is directed into the main airstream direction, wherein the airstream shall be undisturbed. Accordingly the intake opening is exposed to the main airstream and accordingly to rain drops or snow or any other objects in the air.

Pitot tubes and static probes may develop blockages for several reasons during flight of the aircraft or even when the aircraft does not move. Since a blockage of a tube or probe prevents the pressure sensor comprised in the tube from detecting the correct airspeed or atmospheric pressure, a blockage or partial blockage may have severe impact on the accuracy of the determined airspeed and atmospheric pressure, which in turn may have severe impact on the safe operation of the aircraft.

A plurality of situations is known that may cause at least a partial blockage of a tube, wherein even a partial blockage may seriously affect the correct function of a pitot tube or static probe. On the ground a pitot tube or static probe may be clogged for example by insects crawling into the intake opening. Furthermore intakes have been taped shut during maintenance of the aircraft and were accidentally left blocked. During flight the intake may catch an insect or any other material situated in the air, which may accordingly cause a blockage. Particularly pitot tubes, which have their intake opening directed into the main direction of the aircrafts movement, may be affected by catching any objects situated in the air. Another known source for a blockage may be ice, which accrues at the intake opening of a pitot tube or static port. In any case, i.e. regardless what causes the blockage of a tube, erroneous air speed and also altitude determinations may cause dangerous operating situations of an aircraft.

In the prior art a plurality of solutions have been developed to detect and to handle a blockage of a pitot tube or a static probe. US patent 6,205,376 discloses an avionics system and a corresponding method for detecting a blockage of a conventional pitot-static system. A first aircraft movement rate is determined as a function of a pressure using a pitot-static system. A second, reference movement rate is calculated using an independent navigation system, which may be based on the global positioning system (GPS) or an attitude heading reference system. For detecting a blockage or any other malfunction in the pitot-static system, the calculated first aircraft movement rate is compared to the calculated reference movement rate to determine whether the calculated first aircraft rate movement rate falls within a predetermined tolerance range about the calculated reference movement rate. If the calculated first aircraft movement rate falls outside the predetermined tolerance range, then the system concludes that a blockage exists in at least one of the pitot tubes or a static probe of the pitot-static system. The system does not directly check whether a tube of a pitot tube or a static probe is blocked, but concludes a blockage in a tube from a deviation with reference to the reference system.

Modem aircraft deploy more than one pitot-static system, wherein the signals resulting from these systems are compared to one another or they are compared with a reference system as described above. As long as the signals indicate matching signals within a predefined tolerance range, the airspeed and height values indicated in the cockpit may be based on any of the pitot-static systems. However, problems may arise for example in an aircraft using three or more pitot-static systems. If the signals originating from one of the pitot-static systems significantly deviates from the signals originating from the residual systems, then the avionics system in the aircraft will conclude that the one pitot-static system has become erroneous and will rely the determination of the airspeed on the residual systems. However, in case that the one pitot-static system produces accurate signals and the majority of pitot-static systems produce inaccurate signals, then the avionics system will rely on the inaccurate signals, since the system will conclude that the one pitot-static system provides inaccurate signals. Hence, there is a need for improving a pitot-static system, or more generally speaking a pressure measuring tube, for detecting a blockage of said tube.

### Brief description of the drawings

The accompanying drawings illustrate embodiments of the invention, wherein
- Fig. 1: depicts a first embodiment of a pitot tube;
- Fig. 2: depicts a second embodiment of a pitot tube;
- Fig. 3: depicts a third embodiment of a pitot tube;
- Fig. 4: depicts a forth embodiment of a pitot tube.

### Detailed Description

The present invention will now be described in detail with reference to a few preferred embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known processes and steps have not been described in detail in order not to unnecessarily obscure the present invention.

Note that the features as disclosed in the following for a pitot tube can be applied to a static probe or any other pressure probe as well. Accordingly all features as disclosed in the following shall be disclosed also for a pressure probe or any combination thereof, i.e. any pitot static system.

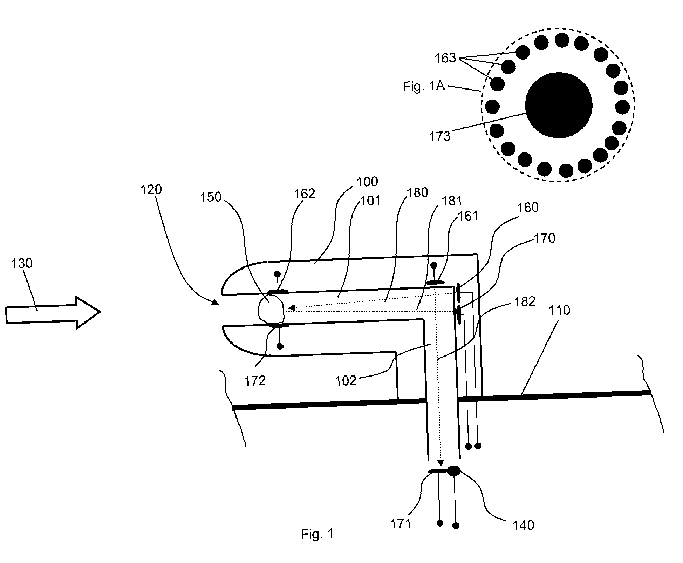

Fig. 1 depicts an embodiment of a pitot tube 100, wherein the drawing is not scale. The outer shape of the pitot tube may be chosen according to an arbitrary design. Furthermore it may be located at an arbitrary object, for example an airplane or a helicopter or a hovercraft. Although the invention in the following description relates to tubes and probes used in an aircraft, the invention may be applied more generally to any vehicle.

Pitot tube 100 in this embodiment is mounted to any part 110 of an aircraft exposed to the air flowing along the aircraft when in flight. In one embodiment tube 100 may be mounted to the fuselage or a wingtip or the vertical stabilizer of an aircraft or any other surface of an aircraft.

Pitot tube 100 exhibits an opening 120 serving as an air intake/inlet. The tube is mounted such that in flight opening 120 is directly exposed to the ambient air 130 flowing along the aircraft. Accordingly the air flow affects a ram air pressure in the tube, which can be measured by any arbitrary pressure sensor 140, wherein it is readily apparent that the sensed pressure can be used to determine the speed of the aircraft relative to the ambient air mass. Pressure sensor 140 conventionally may be located at the end of the pitot tube, but generally may be located anywhere in the tube, since the ram air pressure is constant in the tube. In one embodiment pressure sensor 140 is located inside of the fuselage or the wing or vertical stabilizer of the aircraft, or any other part of an aircraft such that the pitot tube serves as a supply providing the ram air pressure. The signal produced by sensor 140 may be an electrical signal, which may be of any kind suitable for further processing in a processing system, i.e. in an avionics system.

The accuracy of the ram air pressure in the pitot tube may be affected by any obstruction 150 located in the passage 101 of tube, since object 150 may cause turbulences or even block the entire cross-sectional area of the passage thus preventing the pressure in front of sensor 140 from adjusting to the ram air pressure that should be, and which accurately reflects the ram air pressure. In this way any obstruction 150 blocking the cross-sectional area at least partially may falsify the signal produced by sensor 140.

In order to detect an obstructing object 150, an emitter 160 for emitting a wave and a corresponding receiver 170 for receiving a reflected or echoed wave are comprised in the pitot tube. The emitter 160 and receiver 170 are coupled to the power supply system of the aircraft for supplying them with operating power. Furthermore, emitter and receiver are communicatively coupled to the electronic control and monitoring system of the aircraft, i.e. the avionics system, for controlling the operation of emitter and receiver and for receiving information signals from them. Emitter and receiver typically are electronic devices comprising electronic couplings allowing a connection for power supply and communication.

In one embodiment the wave emitted by emitter 160 and received by receiver 170 is a light wave, particularly a laser wave. Correspondingly emitter 160 may be a laser source and receiver 170 may be a laser detector. Particularly, laser emitter 160 may be a laser diode located at a sidewall of the tube, wherein emitter 160 is arranged such that an emitted laser wave is directed to opening 120. A laser wave emitted by laser source 160 will accordingly travel through passage 101 of the tube as indicated by arrow 180.

In case there is no obstructing object 150 located in the pathway of the laser wave, there will be no reflected wave 181. The emitted laser wave 181 will accordingly leave pitot tube 100 fully. Receiver 170, which in this embodiment may be a photo diode sensitive for the wavelength of the emitted laser wave, accordingly will not detect a reflection of the emitted laser wave, thus indicating that an obstruction was not detected in the pitot tube, or at least in the monitored portion of the pitot tube, which may disturb the accurate pressure sensing. More generally, any wave emitted from emitter 160 in this case, i.e. when there is no obstruction in the passage of the pitot tube, will leave the tube without being reflected. Hence, the corresponding receiver/sensor 170 will not detect a reflected wave, thus indicating that no obstruction was detected in passage 101.

In contrast to that an obstruction object located in the pathway of the laser wave will reflect at least a portion of the wave, thus producing a reflected wave 181 travelling from object 150 in the direction as indicated by the arrow. Typically the reflected wave will not be reflected by exactly 180°, such that the reflected portion exactly and only travels along the pathway of emitted wave 180. Instead the reflection typically causes wave 180 to be reflected diffused, such that at least a portion of reflected wave 180 hits sensor 170, thus enabling sensor 170 to detect reflected wave 181. In case sensor 170 senses a wave, a corresponding signal is produced and forwarded to the control system, which accordingly concludes that an obstructing object is located in the passage 101 of the tube.

In this way tube 100 is monitored and the control system, i.e. the avionics system, can process the detected blockage. In one embodiment the avionics system will display the detection of the blocked tube and may henceforth disregard signals from that tube or may start actions to clean the tube from the obstructing object. Actions for cleaning the tube from the detected object 150 may comprise heating the tube by switching on a heating comprised in the tube as known from conventional tubes.

Optionally the control system may evaluate the delay between emitting the wave and detecting a reflected portion of the wave in sensor 170 in order to determine the distance of the object from emitter and sensor respectively. Since the travelling speeds of all kinds of waves are known, the distance of the wave reflecting object can be easily calculated based on the measured delay between emitting wave 180 and detecting reflection 181. Based on the calculated distance the control system may determine whether the reflecting object is located in the tube or in front of the tube, but outside the tube.

The wave emitted by emitter 160 and sensed by sensor 170 in one embodiment may be a laser wave as mentioned above. However, the invention shall not be limited by that. In alternative embodiments the wave can any arbitrary electromagnetic wave having a wavelength of laser light or visible light or in the infrared spectrum or below or above these spectra, as long as a suitable emitter and a corresponding sensor can be provided. Similarly radio waves emitted by any suitable radio frequency emitter can be used. In still another embodiment the wave can be a mechanical wave of arbitrary wavelength as emitted by a mechanical oscillator, wherein the mechanical waves may have a wavelength in the audible or non-audible frequency spectrum, particularly of ultrasonic wavelength.

In any case sensor 170 is adapted to exactly sense the frequency of the wave as emitted by emitter 160. In this way emitter 160 matches sensor 170 in wavelength, thus limiting the risk of the sensor to detect a signal, which does not originate from emitter 160.

Optionally an emitter 160 may be formed by a plurality of emitters 163, each emitting a directed wave, particularly a light wave of arbitrary wavelength, specifically a laser wave, as depicted in detail view Fig. 1A. The plurality if emitters 163 is arranged such that each emitted wave propagates alongside and in close vicinity to the inner sidewall of the tube. In one embodiment an emitter 163 can be a laser diode emitting a laser beam/pulse. As the laser pulse propagates in the close vicinity of the inner sidewall of the tube, an object located at said sidewall will cause the pulse to be at least partially reflected. Since the reflected pulse is detected by a sensor, the small object is detected. In this way the beginning of the forming of an obstructing object, i.e. the beginning of ice forming in the tube, can be detected. Even more generally, any partial blockage of a passage, for example as caused by a hose or a non-correct connection, can be detected.

Said plurality of emitters 163 in one embodiment can be arranged in a ring shape, such that the plurality of emitted waves monitors the entire inner sidewall of the tube. In one embodiment of the arrangement of the plurality of emitters 163, a corresponding sensor 173 can placed in the middle of the plurality of emitters 163, wherein said sensor 173 serves for sensing a reflection of a wave emitted by any arbitrary of the plurality of emitters 163.

In still another embodiment - not shown - , the plurality of emitters 163 can be formed by a corresponding plurality of optical fibres coupled to at least one source, wherein a tip of a fibre emits a wave.

Optionally emitter 160 is capable of emitting a high energy wave for removing an obstructing object from a tube; in particular the emitter may be capable of outputting the high energy wave for a long duration. In one embodiment emitter 160 may emit a laser wave having energy to bum an object 150, alternatively an infrared IR source can be used similarly. In particular emitter 160 may be adapted and configured to emit a short-time low power wave and a high power wave for a long time. In normal operation, i.e. when the previous detection cycle did not reveal an obstructing object 150, emitter 160 will emit a low power wave 180 for monitoring the passage 120 of tube 100. Sensor 170 will accordingly be sensitive in a predefined time span for sensing a reflection of the emitted low power wave, wherein the time span is adjusted to start when emitting the wave and comes to an end, when the wave has left the tube. Accordingly sensor 170 will be sensitive to the wave of emitter 160 only if that is a low power wave. In case an obstructing object has been identified in the tube, then emitter 160 may emit a wave of higher power in order to destroy the object. Accordingly emitter 160 may be adapted and configured to output low power wave, used for detecting an obstruction, or a high power wave for destroying an identified obstruction thus cleaning passage 101 from the obstruction.

As a side effect, since emitter 160 will produce heat while being operated and particularly when outputting a high power wave for a long-time duration. The heat can be used to heat up the tube thus replacing special heating means for heating the tube. Emitter 160 in that case may be thermally coupled to the tube.

Furthermore emitter 160 may be arranged such that the emitted wave intentionally hits the tube, i.e. the inner sidewalls of the tube, in order to heat the tube. In one embodiment emitter 160 may be arranged such that every emitted wave heats hits the tube. Alternatively it may be arranged that high-power waves only hit the tube. The use of waves emitted by emitter 160 may heat any obstructing object and/or the tube very fast when comparing the heating performance to conventional heating means. With regard to a pitot tube the use of the waves for heating the tube or any obstructing object 150 located inside the tube is advantageous in so-called icing-conditions, i.e. atmospheric conditions leading to the formation of ice within the tube or particularly at the opening 120 of the tube.

Optionally a plurality of emitters and sensors may be arranged in the tube for monitoring different portions of the tube. In addition to emitter 160 and corresponding sensor 170, the tube may comprise emitter 161 and corresponding sensor 171 for monitoring another portion of the tube. Due to the nature of waves to propagate in straight directions, emitter 160 and sensor 170 monitor a first portion of the tube, i.e. the passage as indicated by reference numeral 101. Emitter 161 and sensor 171 are arranged to monitor passage 102 of tube 100, which cannot be monitored by emitter/sensor 160/170. In contrast to the arrangement of emitter 160 and sensor 170 respectively, emitter 161 and sensor 171 as arranged will detect an obstruction in the monitored passage 102, when sensor 171 does not sense a wave transmitted by emitter 171. Note that in this arrangement emitter/sensor 160/170 can be operated alternating with an operation of emitter/sensor 161/171 in order to prevent a sensor from sensing a wave originating from the other emitter.

In an alternative arrangement emitters and sensors are arranged such that emitted waves propagate perpendicular to the long axis of a passage, wherein an emitter 162 is located opposed to a sensor 172. As described above for emitter/sensor pair 161/171 an obstructing object is detected when an emitted wave is not or not fully, i.e. in the intensity as sent, detected by the sensor. In particular a plurality of pairs of emitters 162 and associated sensors 172 can be arranged along the tube in order to monitor the entire length of the tube.

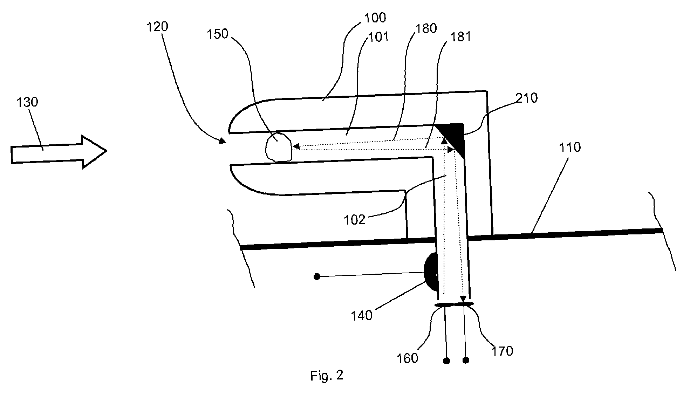

Fig. 2 depicts an embodiment of a pitot-tube 100, in which a wave is redirected by a reflector means 210. Note that the reflector means advantageously may be formed by a sidewall of the tube, such that the tube is designed to reflect a wave 180. A wave 180 emitted by emitter 160 accordingly travels through passage 102, is reflected at reflector means 210 and subsequently travels through passage 101 of the tube. In case there is no obstructing object 150 located in either passage, wave 180 will leave the tube through its opening with being reflected and similar as described above. In case an obstructing object 150 is located in passage 101 or 102 of the tube, the wave as emitted from emitter 160 is reflected by said object 150 thus producing a reflected wave 181. Reflected wave 180 is reflected by reflector means 181, which in this way redirects the emitted wave 180 and reflected wave 181 respectively. In this way the number of emitters and sensors can be reduced when using reflector means 210. Furthermore emitter 160 and sensor 170 optionally can be arranged in this particular embodiment inside the fuselage of the aircraft.

Note that in this embodiment pressure sensor 140 may be located at a sidewall of the tube.

The design of a pitot tube, which usually is mounted as a separate module to the fuselage of an aircraft, may be simplified in that there is no need to incorporate an emitter 160 or a sensor 170 respectively. In case emitter 160 is also operated as a heating device for the tube, the tube may be further simplified by omitting a heating device. Accordingly, when mounting or unmounting a pitot tube simplified as described, the maintenance personnel cannot forget to connect or disconnect any electrical wiring of the tube, thus simplifying and improving the tube in terms of potential malfunctions and errors.

Note that in this embodiment emitted waves may also be used for heating the tube and for removing an object as described above, wherein the reflector means may also reflect a high-power wave.

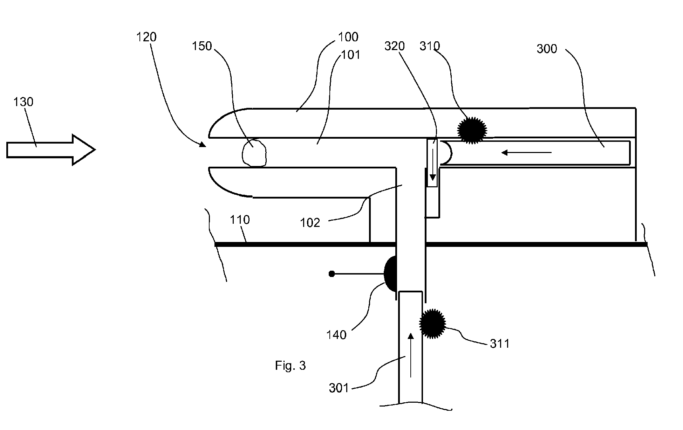

Fig. 3 schematically depicts a further embodiment of a pitot-tube 100 allowing a direct detection of an obstructing object located in the tube. In this embodiment a rod shaped means 300 can be moved into a passage 101 of the tube for detecting and optionally for removing an obstructing object 150 located in a passage. Rod shaped means may have a length being essentially identical to the length of the passage, or the length of the means may exceed that of the passage thus enabling the means to poke out of the passage.

For moving the rod shaped means, the tube furthermore comprises at least one actuator 310 coupled to the rod shaped means. Generally actuator 310 can be formed by any electromechanical drive suitable for moving means 300 in and out of passage101. In one embodiment said actuator can be an electric motor turning a cogwheel. The cogwheel may cooperate with a cograil integrated into or mounted to means 300. So, when the electric motor turns the cogwheel, means 300 is pushed into passage 101 or pulled out of it respectively.

When pushing rod shaped means 300 into passage 101, the mechanical resistance, which means 300 experiences, indicates, whether an object obstructed the moving of means 300 through passage 101. When means 300 is driven by an electric powered actuator, the current consumed by the actuator when moving the means indicates the mechanical resistance, since the actuator typically will draw a larger current when moving means 300 against mechanical resistance, unless the current is limited. Hence, by evaluating the amplitude of the consumed current a control system may detect an obstructing object in the tube. That is, if the amplitude of the consumed current exceeds a predefined threshold, the control system concludes the finding of an obstruction.

Optionally, when the control system detects a large current drawn by actuator 310, it may control the actuator to further move means 300 in order to remove the detected obstructing object. In this case, the control system may control the actuator in order to prevent the actuator from damages caused by drawing high current for a long time. The control system accordingly may limit the maximum current amplitude drawn by actuator 310. In case an obstructing object is detected and means 300 can be moved to the maximum extent, i.e. any obstructing object was pushed out of the tube, then the control system concludes that the obstruction has been removed successfully.

The tip of rod shaped means 300 may have a variety of designs. In one embodiment the tip may be shaped concave as depicted in the drawing. The concave shaped tip enables to cut any obstructing object from the inner sidewalls of the tube, since the concave shape of the tip causes sharp edges of the tip. In an alternative embodiment the tip of rod shaped means 300 may have a planar surface. In still an alternative embodiment the tip may be shaped convex, particularly the tip may be shaped spiky thus allowing a rod shaped means to pierce an obstructing object.

A pitot tube 100 or a static probe may comprise one or more rod shaped means for detecting and removing an obstructing object if necessary. As depicted in the drawing, a first rod shaped means 300 may be used to monitor a first passage 101 and a second rod shaped means 301 may be used for a second passage 102 of the tube or probe, wherein the first and second passage are arranged angular to each other and wherein the operation of means 300, 301 are coordinated. In one embodiment, i.e. particularly in an arrangement as depicted in Fig. 3, means 301 is moved in the direction as indicated by the arrow through passage 102 before means 300 is moved into passage 101. Any object located in passage 102 accordingly is pushed/moved into the corner formed by passages 101/102 and is then moved through passage 101 to the outside of tube 100.

Optionally, tube 100 may comprise a gate 320 for covering the storage of a rod shaped means 300. While the rod shaped means is not operated, i.e. it is not moved in and out of passage 101, gate 320 may remain in the position as indicated in the drawing, i.e. covering the storage opening of means 300. In this position gate 320 protects 300 rod like means from any object penetrating tube 100. Particularly in conditions exhibiting a high probability for forming ice in a passage, the gate may prevent rod shaped means from freezing to its storage, which could obstruct an operation of means 300. When operating means 300, gate 320 opens in order to allow means 300 to be moved into passage 101. For that purpose gate 320 is operatively coupled to a drive - not shown in the drawing - for moving the gate as indicated by the arrow.

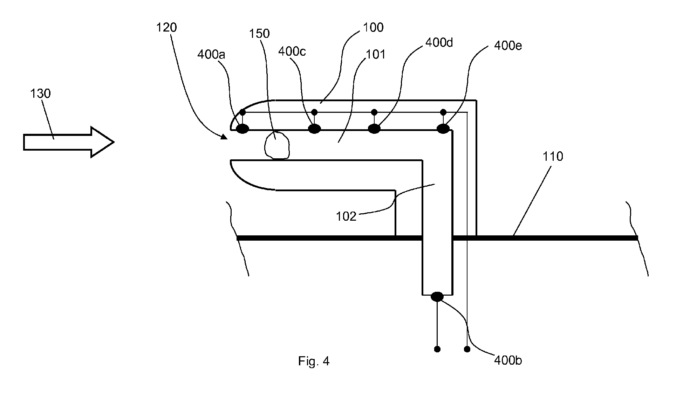

Fig. 4 depicts a further embodiment of a pitot tube 100, which allows detecting a blockage of the tube. Similar as for the tubes described above it may be of any outer shape and may be coupled to any aircraft 110. Tube 100 is mounted to the aircraft, such that opening 120 is directed to the flow direction 130 of ambient air. The flow of ambient air affects a ram air pressure in passage 101, 102 of the tube, which is constant at any location within the passage as long as there is no blockage of a passage 101, 102 of the tube. Variations in airspeed or air density or the static pressure cause correlated variations of the pressure.

Pitot tube 100 comprises at least two pressure sensors 400a, 400b for detecting a blockage of a passage. With regard to the long axis of a passage the sensors are located at different, distant positions. In one embodiment a first pressure sensor, i.e. sensor 400a, is located at the tip of the tube, i.e. close to the inlet opening 120 of the tube, and a second sensor, i.e. sensor 400b is located at the end of the passage 102 of the tube. Each of the pressure sensors senses the pressure at its specific location and produces a signal, which may be an electric signal suitable for further processing in a connected control system, which is not shown in the figure.

In normal operation the pressure inside the passage, or inside a plurality of connected passages 101 and 102, is identical, wherein normal operation shall mean that there is no blockage in a passage of the tube. Accordingly sensor 400a senses the same pressure as sensor 400b. A processing system, i.e. particularly an avionics system, accordingly will not find a difference in the pressure values indicated by the signals provided by sensors 400a and 400b.

In case an obstructing object 150 causes a blockage of the passage between sensor 400a and 400b, any variation of the pressure will not be indicated by sensor 400b, since the blockage prevents an equalization of the pressure within the passage. That is, from the moment an obstructing object 150 located somewhere in the passage of the tube and located between sensor 400a and 400b causes sensor 400b to sense the pressure that was at the moment the blockage was complete. So from then on, only sensor 400a will indicate a pressure variation. Hence, by comparing the indicated pressure values as signalled by sensor 400a and 400b respectively, a processing system can easily conclude that there is a blockage located in the passage between sensors 400a and 400b. The processing system, i.e. the avionics system, may then display the blockage and/or disregard the signal provided by the tube, or it may at least disregard signals provided by sensor 400b. Taking into account that there are permanently small pressure variations in a pitot tube or a static probe, wherein even finest variations can be detected by the sensors, a comparison of the signals provided by the sensors allows to monitor the tube permanently.

Optionally pitot tube 100 may comprise a plurality of pressure sensors 400a to 400e, which are located offset from each other. Said plurality of pressure sensors, each pressure sensor providing a signal to the processing system, enables the processing system to locate the blockage in the passage more exactly. For example, the location of the blockage 150 in the depicted embodiment can be located by comparing the signalled pressure values.

## Claims

1. A pitot tube (100) or static probe comprising at least one wave emitter (160) and at least one corresponding wave sensor (170), the wave emitter arranged to emit a wave (180) to propagate through a passage of the tube or probe and the sensor arranged to detect a wave reflected by an object located in the passage of the tube or probe respectively.

2. The pitot tube or static probe of claim 1, wherein the wave emitter is one of a laser emitter or a light emitter or a mechanical oscillator or a radio frequency emitter.

3. The pitot tube or static probe of any preceding claim, further comprising a reflector means (210) for intentionally deflecting a wave.

4. The pitot tube or static probe of any preceding claim, wherein the emitter (160, 161, 162) is capable to emit the wave (180, 181, 182) at a first and at a second power level, the second power level being of higher energy than the first power level.

5. A pitot tube or static probe comprising at least one wave emitter (161) and one corresponding wave sensor (171), said emitter arranged to emit a wave (182) to propagate through a passage (102) of the tube or probe and the sensor arranged to detect said wave (182) directly.

6. The pitot tube or static probe of claim 5, wherein the emitter (162) is arranged to emit a wave propagating perpendicular to the long axis of the passage.

7. A pitot tube or static probe comprising at least one rod shaped means (300, 301) and at least one actuator (310) for moving the rod shaped means into a passage (101, 102) of the pitot tube or static probe.

8. The pitot tube or static probe of claim 7, wherein the tip of the rod shaped means (300, 301) is either shaped convex or concave and spiky.

9. A pitot tube or static probe comprising at least a first pressure sensor (400a) and a second pressure sensor (400b), wherein the first and second pressure sensor with regard to the long axis of a passage in the tube or proberespectively are located offset from each other.

10. The pitot tube or static probe of claim 9, wherein one of the pressure sensors is located close to the opening of the tube or probe.
